# EUROPÄISCHE PATENTANMELDUNG

(11) **EP 1 327 961 A1**
(43) Veröffentlichungstag der Anmeldung: **16.07.2003**
(21) Anmeldenummer: 02000769.6
(22) Anmeldetag: 14.01.2002
(51) Int. Cl.: G07B 15/02, G06K 19/07, G06K 7/00

(54) **Verfahren für die Registrierung von Billetten mittels Slotzonen und Containertelegrammen**

(71) Anmelder: Siemens Transit Telematic Systems AG, 9552 Bronschhofen (CH)
(72) Erfinder: Kälin, August, 8909 Bonstetten (CH); Wenger, Bruno, 8804 Au/Zh (CH); Schreier, Balz, 8003 Zürich (CH)
(74) Vertreter: Fischer, Michael, Dr.

(57) **Zusammenfassung**

In einer Erfassungszone (22) befindliche Billette (10) erfahren in einem ersten Schritt (marq) mit einer von einer Sendeeinheit (31) ausgesandten Informationseinheit (ST) eine Stempelung. Bei Beginn des Bezuges einer Leistung wird in einem zweiten Schritt (phase1) eine weitere erste Informationseinheit (S_{G}) ausgesandt, worauf sich jene Billette (10) in einer ersten Raster (CF) in vorgegebenen Slots mit eine zweite Informationseinheit (T) aussenden, deren Empfang durch eine zweite Sende-/Empfangseinheit (32) jeweils mit einer Quittungsmeldung Q bestätigt wird. Jene Billette (10), denen kein Slot zugeordnet war, erhalten in einem weiteren Raster (ACA) einen Slot zugeteilt. In einem dritten Schritt (phase2) werden in den vorgegebenen Slots gezielt zweite Informationseinheiten (U) an die Billette (10) übermittelt, so dass die Registrierung einer bezogenen Leistung sowohl auf einem Billett (10) wie auch auf Seite der Sende-/Empfangseinheiten (31, 32) registriert werden kann. Das erfindungsgemässe Verfahren mit der Zuordnung von Slots zu den Billetten (10) ermöglicht eine kollisionsarme Kommunikation. Durch eine variable Struktur der übermittelten Informationseinheiten kann das erfindungsgemässe Verfahren an verschiedenste Anwendung flexibel angepasst werden.

## Beschreibung

Die vorliegende Erfindung betrifft ein Verfahren nach dem Oberbegriff des Patentanspruchs 1.

Die vorliegende Erfindung betrifft das Gebiet des sogenannten Fahrgeldmanagements mit elektronischen Billeten. Die Erfassungsverfahren werden als "Walk-In/Walk out" sowie als "Be in/Be Out" bezeichnet. In der Schrift WO 01/03057 A1 ist ein Walk In/Walk Out" Verfahren offenbart, bei dem an oder in einem Türbereich die Bewegungsrichtung eines elektronischen Billettes direkt oder indirekt aufgrund einer sogenannten Historie festgestellt wird. Beim in der Schrift WO 01/20557 A1 beschriebenen Verfahren erfolgt die Verrechnung einer bezogenen Leistung aufgrund einer Registrierung, ob sich ein elektronisches Billett innerhalb einer sogenannten Erfassungszone zu definierten Zeitpunkten befunden hat. Bei diesem Verfahren und dem entsprechenden System werden die Billette durch einen ersten Sender in einen Wachzustand überführt werden, um nachfolgend während dem Bezug einer Leistung, z.B. eine Fahrt, mittels einer bidirektionalen intermittierenden Kommunikation eine Registrierung vorzunehmen. Aus Gründen des Energiebedarfs auf den Billetten erfolgt die Kommunikation intermittierend in dem Sinne, als auch die auf dem Billett angeordneten Empfangsmodule nur zu bestimmten Zeitpunkten in einem Raster in einem empfangsbereiten Zustand "aktiv" geschaltet sind.

Diese bidirektionale Kommunikation erfolgt in einer Zone, die beispielsweise die Dimension eines Trams aufweist. Dabei sind grössenordnungsmässig 100 bis 150 verschiedene Billette zwischen zwei Haltestellen zuverlässig zu erfassen. Um Kollisionen zu vermeiden bzw. um bei einer erfolgten Kollision in der Kommunikation dennoch möglichst alle Billette zuverlässig zu registrieren, ist in der Schrift WO 01/84472 ein Verfahren zum Kollisionsmanagement vorgeschlagen, bei dem vor Aussenden einer Meldung geprüft wird, ob das Funkmedium frei ist. Sich dennoch ereignende Kollisionen werden durch das Ausbleiben einer Quittungsmeldung erkannt. Nachfolgend wird das Aussenden einer Meldung in einem festen oder durch einen Zufallsgenerator bestimmten Zeitraster wiederholt, wobei auch in dieser weiteren Phase stets geprüft wird, ob das Funkmedium frei ist.

Das in WO 01/20557 A1 offenbarte Verfahren erfordert ein sehr aufwendiges Timing, damit sich die Billette in den vereinbarten Zeitraster empfangsbereit sind. Die vorgeschlagenen Verfahren aus dem vorgenannten Stand der Technik erfüllen die weiteren Anwendungen wie z.B. eine erweiterte Information der die Billette tragenden Personen nicht mehr vollumfänglich. Das in WO 01/20557 A1 offenbarte Verfahren heisst auch "Be-In/Be-Out" Verfahren und steht für die Eigenschaft, dass die tatsächliche Anwesenheit erfasst wird.

Der vorliegenden Erfindung liegt daher die Aufgabe zugrunde, ein Verfahren der eingangs genannten Art anzugeben, das in der bidirektionalen Kommunikation eine Vereinfachung erlaubt und trotzdem eine hohe Flexibilität und Erweiterbarkeit für die weiteren Anwendungen, insbesondere eine broadcastartige oder gezielt adressierte Verteilung von Information ermöglicht.

Diese Aufgabe wird durch die im Patentanspruch 1 angegebenen Massnahmen gelöst. Vorteilhafte Ausgestaltungen der Erfindung sind in weiteren Ansprüchen angegeben.

Durch die erfindungsgemässen Verfahrensschritte wonach,
- marq:: die erste Informationseinheit enthält die Identität der Erfassungszone oder der den Erfassungszonen zugeordneten Sende- und Sende-/Empfangseinheiten und wird bei Empfang durch ein Billett auf diesem gespeichert;
- phase:: mit einer weiteren von einem Billett empfangenen ersten Informationseinheit wird eine bidirektionale Kommunikation mittels zweiter Informationseinheiten dann initiiert, wenn die im Verfahrensschritt marq: und phase: übermittelte Identität übereinstimmt, wobei in den zweiten Informationseinheiten ein Feld (KEY) vorgesehen ist, das die Struktur der zweiten Informationseinheit beschreibt;
wird ein Verfahren geschaffen, mit dem eine bidirektionale Kommunikation stets mit einer ersten Informationseinheit initiiert wird und dadurch für eine Vielzahl von Billetten kein aufwendiges Timing unterhalten werden muss. Dadurch wird die Zahl der Kollisionen erheblich reduziert und mit einer Angabe der Struktur der übermittelten zweiten Informationseinheit kann Information in sehr flexibler Weis übermittelt und somit verteilt werden. Ein solches - auch semi-duplexes genanntes - Verfahren erlaubt auch, adressiert oder broadcast-mässig gezielte Informationen zu verteilen um dadurch sogenannte Public Broadcast Messaging genannte Dienste realisieren zu können.

So können sich die folgenden Vorteile zusätzlich ergeben:
i) Dadurch dass
   dass die Frequenz der ersten Sendeeinheit so gewählt ist, dass das Feld innerhalb der Erfassungszone als Nahfeld ausgebildet ist;
   können die Billette mit einer ersten Informationseinheit geweckt werden und weisen deshalb einen geringeren Energiebedarf auf (Patentanspruch 2).
ii) Dadurch dass
   der Verfahrensschritt phase: in die Schritte phase1: und phase2: gegliedert ist;
   können im ersten Schritt von den Billetten mittels bidirektionaler Kommunikation die Anwesenheit festgestellt werden und im zweiten Schritt auf die Billette gezielt Information übertragen werden. (Patentanspruch 5).
iii) Dadurch dass
   im Verfahrensschritt phase1: ein erstes Raster mit einer festen Einteilung in Slots und ein zweites Raster vorgesehen sind und dass auf jedem Billett eine Zuordnung zu einem Slot mit einer Slotnummer speicherbar ist;
   kann die Kommunikation mit einer Vielzahl von Billetten innerhalb einer Erfassungszone unterhalten werden, ohne dass aufgrund der Anzahl Billette Kollisionen in der Kommunikation auftreten (Patentanspruch 7).
iv) Dadurch dass
   jene Billette, bei denen eine Slotnummer gespeichert ist, eine zweite Informationseinheit im betreffenden Slot aussenden und die anderen Billette zu einem zufällig bestimmten Zeitpunkt innerhalb des zweiten Rasters eine zweite Informationseinheit aussenden, wobei in der Quittungsmeldung eine Slotnummer enthalten ist und bei noch nicht erfolgter oder als nicht gültig erkannter Zuordnung gespeichert wird;
   können alle Billette, die neu in einer Erfassungszone kommen, mit einer Slotnummer versehen werden und dadurch wird eine sichere Registrierung auch bei grossem Umsatz von Trägern der Billette ermöglicht (Patentanspruch 8).
v) Dadurch dass
   dass die Billette während der Aussendung einer zweiten Informationseinheit und eines Intervalls danach aktiv geschaltet sind;
   können von der betreffenden Billette Quittungsmeldungen empfangen werden, ohne dass deswegen eine hohe Einschaltdauer und dementsprechend ein höherer Energieverbrauch auftreten (Patentanspruch 9).
vi) Dadurch dass
   der Verfahrensschritt phase2: in einem Raster mit einer festen Einteilung in Slots vorgenommen wird und nach Empfang der weiteren ersten Informationseinheit jedes Billett im betreffenden Slot aktiv geschaltet wird, um eine von der zweiten Sende-/Empfangseinheit ausgesendete zweite Informationseinheit empfangen zu können;
   sind Kollisionen in der bidirektionalen Kommunikation aufgrund der Vielzahl von Billetten ausgeschlossen und es kann auch in Richtung der Billette gezielt eine Information übertragen werden (Patentanspruch 11).
vii) Dadurch dass
   das Aussenden einer Quittungsmeldung dann erfolgt, wenn aufgrund einer Prüfung in der Sicherungsschicht kein Fehler festgestellt wurde;
   braucht auf der Ebene der Anwendung keine weitere Prüfung vorgenommen zu werden und durch eine nur partielle Aktivierung der Billettschaltung kann der Energieverbrauch zusätzlich eingeschränkt werden (Patentanspruch 14).
iix) Dadurch dass
   in den an die Billette übermittelten ersten und/oder zweiten Informationseinheiten in wenigstens einem Informationsfeld eine Information enthalten ist, dass sich die betreffende Informationseinheit an nur ein Billett oder an eine Vielzahl von Billetten gerichtet ist;
   braucht die gleiche Informationseinheit nur einmal übermittelt zu werden, in dem ein einziger bestimmter Slot für eine solche sogenannte Broadcastmeldung vorgesehen ist (Patentspruch 16).
ix) Dadurch dass
   in den an die Billette übermittelten ersten und/oder zweiten Informationseinheiten in wenigstens einem Informationsfeld eine Laufnummer enthalten ist, die dann eine Aenderung erfährt, wenn der Nutzinhalt einer vorhergehend ausgesandten Informationseinheit eine Aenderung erfahren hat;
   kann von den betreffenden Billetten bei festgestellter Gleichheit zu einer zuvor übermittelten Laufnummer eine empfangene zweite Informationseinheit zu einem frühen Zeitpunkt verworfen werden die Billettschaltung gegebenenfalls wieder in den Schlafzustand überführt werden; dadurch ist ebenfalls eine Verminderung des Energiebedarfes möglich (Patentanspruch 17).

Die Erfindung wird nachfolgend anhand der Zeichnung für das Beispiel zur Erfassung von Billetten in einem Eisenbahnwagen näher erläutert. Dabei zeigen:
- Fig. 1: den Grundriss eines Eisenbahnwagens mit Einstiegs- und Durchgangsbereichen und der Anordnung von Sende-/Empfangseinheiten und der zugehörigen Zonen;
- Fig. 2: Aufbau eines elektronischen Billettes;
- Fig. 3a: Ablauf der Kommunikation mit einem Billett in der Uebersicht mit den Verfahrensschritten marq, phase1 und phase2;
- Fig. 3b: Darstellung der Kommunikation mit einem Billett mittels verschiedener Informationseinheiten;
- Fig. 4: Detaillierte Darstellung der Kommunikation mit einer Mehrzahl von Billetten mittels Slotzonen im Verfahrensschritt phase1;
- Fig. 5: Detaillierte Darstellung der Kommunikation mit einer Mehrzahl von Billetten mittels Slotzonen im Verfahrensschritt phase2.

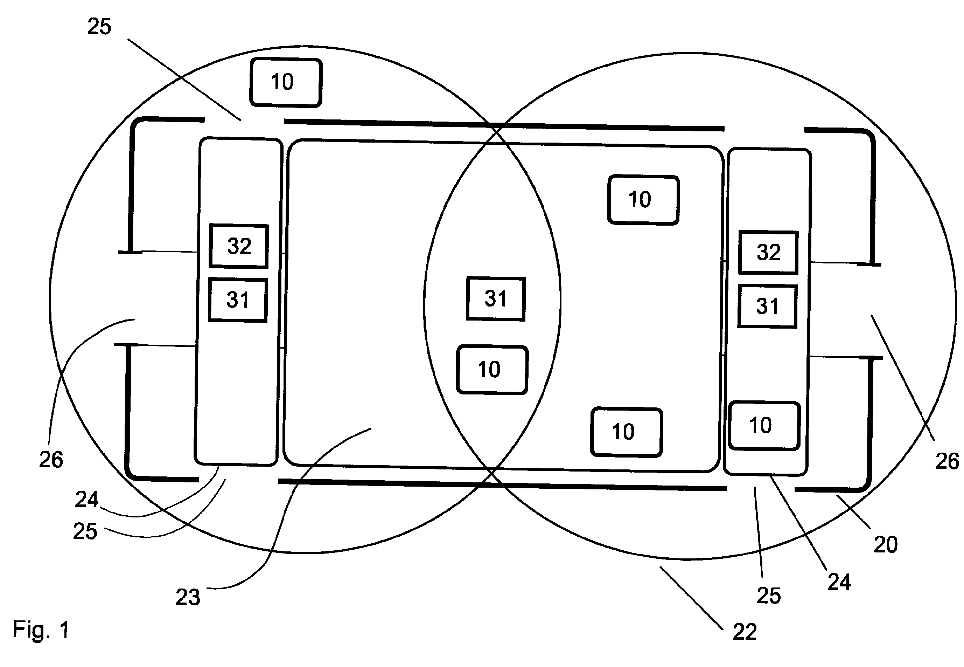

In Fig. 1 ist der Grundriss eines Eisenbahnwagens 20 mit vier Einstiegsbereichen 25 sowie je einem Durchgangsbereich 26 am Wagenende dargestellt. Die beiden Bereiche 25, 26 ermöglichen den Zugang durch eine Plattform 24 zum Passagierraum 23. Türen sind der Übersichtlichkeit halber nicht eingezeichnet. Den beiden Plattformen 24 ist je eine erste Sendeeinheit 31 und eine zweite Sende-/Empfangseinheit 32 zugeordnet. Die räumliche Anordnung der vorgenannten Einheiten 31 und 32 ist in der Figur 1 lediglich beispielhaft angegeben. Weitere Sendeeinheiten 31 können im Wageninnern abhängig von der Länge des Wagens ebenfalls vorgesehen sein. Eine Sendeeinheit 31 deckt eine bestimmte Umgebung mit einem als Nahfeld ausgebildetem elektromagnetischen Feld ab. Das Nahfeld ist üblicherweise definiert mit r < 0.6 λ), wobei λ für die Wellenlänge steht. Für eine Ausdehnung von 1 m bis ca. 6 m in der Erfassungszone 22 ergibt sich eine Frequenz von 30 MHz. In der Praxis haben sich Frequenzen von 27 MHz, 13.5 MHz und von 6.78 MHz als besonders vorteilhaft erwiesen. Aus der vorgenannten Distanzangabe von 1 m .. 6 m sind wie vorstehend erwähnt allenfalls mehrere Sendeeinheiten 31 vorzusehen. Aus der Sicht der zweiten Sende-/Empfangseinheit 32 entspricht die Begrenzung der Erfassungszone 22 ungefähr der Reichweite für einen noch gesicherten Empfang durch ein auf dem Billett 10 vorhandenes zweites Sende-/Empfangsmoduls 12. Das von der Sende-/Empfangseinheit 32 ausgesandte elektromagnetische Feld sollte möglichst überall im Wagen eine genügende Feldstärke und gute Ausbreitungseigenschaften aufweisen. Hiefür ist beispielsweise ein Frequenzband im Bereich von 433 MHz oder 868 MHz vorgesehen. Oberhalb eine Frequenz von rund 300 MHz ist das elektromagnetische Feld in der betrachteten Erfassungszone 22 als sogenanntes Fernfeld ausgebildet. Für den sogenannten Down-Link und Up-Link können aus den vorerwähnten Bändern 433 MHz oder 868 MHz zwei verschiedene Frequenzen vorgesehen sein, die sich z.B. um 200 oder 500 kHz unterscheiden. Eine Ueberlappung der beiden Erfassungszonen 22 entsprechend der für diesen Eisenbahnwagen 20 paarigen Anordnung der Sende-/Empfangseinheiten 32 ist vorteilhaft, um alle Passagiere unabhängig von ihrer Lage im Eisenbahnwagen 20 erfassen zu können.

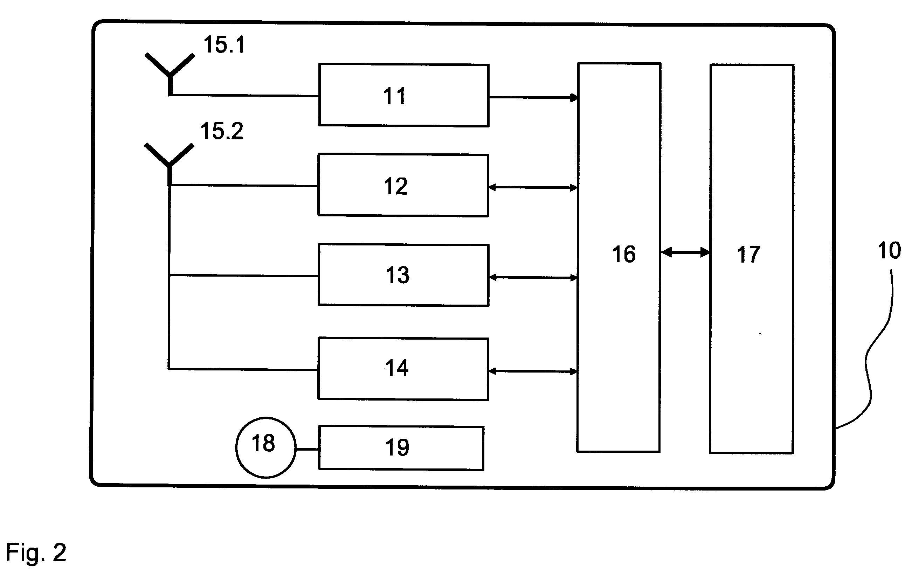

Fig. 2 zeigt das Blockschaltbild eines elektronischen Billettes 10. Solche Billette 10 haben vorzugsweise ein Kreditkartenformat. Bezüglich der Technologie sind solche tragbaren Karten dem Fachmann auch unter dem Begriff "Smartcard" bekannt. Im Blockschaltbild ist als zentrale Steuereinheit ein Prozessormodul 16 vorgesehen mit einem zugeordneten Speichermodul 17 sowie mit einem Empfangsmodul 11, einem zweiten 12, einem dritten 13 und einem vierten Sende/Empfangsmodul 14 verbunden. Das dritte und vierte Empfangsmodul kann für sogenannte Proximity- oder Vincinity-Anwendungen vorgesehen sein. Abhängig von den gewählten Frequenzen können nur eine oder mehrere Antennen vorgesehen sein, in der Ausführungsform gemäss Fig. 1 sind zwei Antennen 15.1 und 15.2 vorgesehen. Die Energieversorgung erfolgt mittels einer Batterie 19 und einem Energieversorgungsmodul 18.

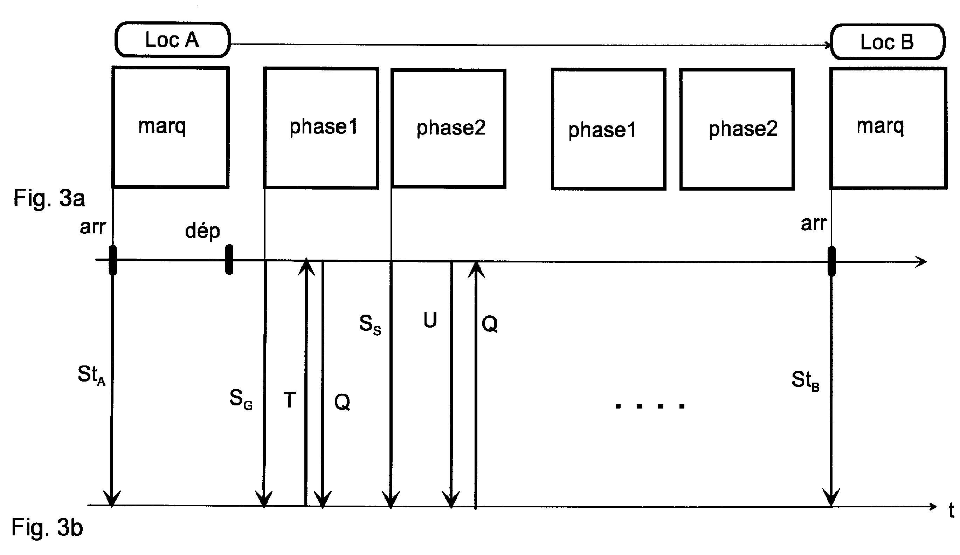

Der prinzipielle Ablauf der bidirektionalen Kommunikation ist in der Fig. 3a dargestellt. Der Ablauf des erfindungsgemässen Verfahrens wird an einem Beispiel einer Tramfahrt zwischen zwei Haltestellen Loc A und Loc B erläutert. Die Richtung von Loc A nach Loc B beinhaltet sowohl ein örtliches Verschieben wie auch das Verstreichen einer bestimmten Zeitdauer in einer Grössenordnung von 20 s bis zu etwa 120 s. Für die Erfassung der Billette zwischen den Haltestellen Loc A und Loc B sind gemäss der Fig. 3a die Phasen marq und phase vorgesehen. Die Phase phase ist in dieser Ausführungsform gegliedert in die Phasen phase1 und phase2, wobei die Phase phase iteriert werden kann. In der Fig. 3b sind zu den einzelnen Phasen die übermittelten Informationseinheiten T, U und Q dargestellt, wobei der Fachmann anstelle von Informationseinheiten auch den Begriff Telegramm verwendet. Den Phasen phase bzw. phase1 und phase2 ist gemeinsam, dass die bidirektionale Kommunikation zwischen zweiter Sende-/Empfangseinheit 32 und Billett 10 stets durch eine von einer ersten Sendeeinheit 31 entstammenden ersten Informationseinheit S bzw. S_{G} und S_{T} initiiert wird.

Eine bevorzugte Ausführungsform des erfindungsgemässen Verfahrens beinhaltet die nachfolgend aufgeführten Schritte. Der Inhalt und die Struktur der übermittelten ersten und zweiten Informationseinheiten wird weiter unten erläutert:

### Verfahrensschritt marq in der Uebersicht:

An der Haltestelle Loc A erfolgt in der Phase marq eine Stempelung der Billette 10 mit einer ersten Informationseinheit St_{A}. Die in der Erfassungszone 22 befindlichen Billette 10 werden dabei durch den Empfang dieser ersten Informationseinheit St aus einem energiesparenden Schlafzustand "geweckt". Die Wirkungsweise des "Weckens" wird weiter unten erläutert. Die vorstehend aufgeführte Abkürzung "marq" steht für marquage (frz.) und hat in einem übertragenen Sinne die Bedeutung einer Stempelung. Die Aussendung der Informationseinheit St_{A} erfolgt mittels der ersten Sendeeinheit 31. Dabei ist in der ersten Informationseinheit St die Identität der betreffenden ersten Sendeeinheit 31 oder des betreffenden Wagens 20 oder Erfassungszone 22 enthalten. Diese Identität wird - unter der Voraussetzung eines korrekten Empfangs der ersten Informationseinheit ST - auf dem Billett 10 gespeichert. Vorzugsweise ist als Organisation zur Speicherung der empfangenen Identitäten ein Stack vorgesehen, je nach Anwendung kann auch eine Ringspeicherorganisation oder allenfalls eine FIFO-Speicherorganisation (First-In, First-Out) vorgesehen sein. Vorteilhafterweise wird in der Phase marq die erste Informationseinheit ST zwischen den mit arr und dép bezeichneten Zeitmarken mehrmals ausgesandt. Im vorliegenden Ausführungsbeispiel stehen arr und dép für die Ankunft bzw. Abfahrt eines Trams an einer Haltestelle.

### Verfahrensschritt phase1 in der Uebersicht :

Nach Abfahrt des betreffenden Trams wird durch die erste Sendeeinheit 31 eine weitere erste Informationseinheit S_{G} ausgesandt. Wie vorstehend erwähnt, ist das elektromagnetische Feld der ersten Sendeeinheit 31 als Nahfeld ausgebildet, d.h. durch die Feldstärke H werden die in diesem Bereich befindlichen Billette 10 aus einem Schlafzustand "geweckt". Durch die erste Informationseinheit S_{G} wird einerseits die Identität der betreffenden ersten Sendeeinheit 31 oder des betreffenden Wagens oder Erfassungszone übermittelt und andererseits wird das diese Einheit S_{G} empfangende Billett aufgefordert, eine zweite Informationseinheit T auszusenden. Diese Aussendung unterbleibt, falls die in der ersten Informationseinheit S_{G} enthaltene Identität nicht vorgängig in einem Verfahrensschritt marq: auf dem betreffenden Billett gespeichert wurde. Ein Billett 10 sendet unter der vorgenannten Voraussetzung nach Empfang der ersten Informationseinheit S_{G} daraufhin eine zweite Informationseinheit T an die zweite Sende-/Empfangseinheit 32, worauf diese den Empfang mit einer weiteren zweiten Informationseinheit Q dem Billett 10 quittiert. Die Quittierung mit der zweiten Informationseinheit Q beinhaltet den korrekten Empfang einer Informationseinheit T, der z.B. mittels einer korrekten CRC (CRC = Cyclic Redundancy Check) festgestellt wird und keine Ueberprüfung auf höheren Layern erforderlich macht. In der Sprache des Fachmanns bedeutet dies, dass Uebermittlungsfehler auf der Sicherungsschicht erkannt werden.

### Verfahrensschritt phase2 in der Uebersicht:

In diesem Schritt kann vorgesehen sein, dass neue Informationseinheiten U zu den Billetten 10 übermittelt werden. Dazu wird von der ersten Sendeeinheit 31 eine erste Informationseinheit S_{S} ausgesandt, die die Aussendung einer nachfolgend von der zweiten Sende-/Empfangseinheit 32 zu übermittelnden zweiten Informationseinheit U ankündigt. Das die zweite Informationseinheit U empfangende Billett 10 quittiert den Empfang mit einer weiteren zweiten Informationseinheit Q. Wie vorstehend bereits ausgeführt, erfolgt die Quittung aufgrund einer CRC-Prüfung und nur dann ausgesendet wird, wenn kein Fehler festgestellt wurde.

Bedarfsweise und solange die Haltestelle Loc B noch nicht erreicht ist, können die Schritte phase1 und phase2 iteriert werden.

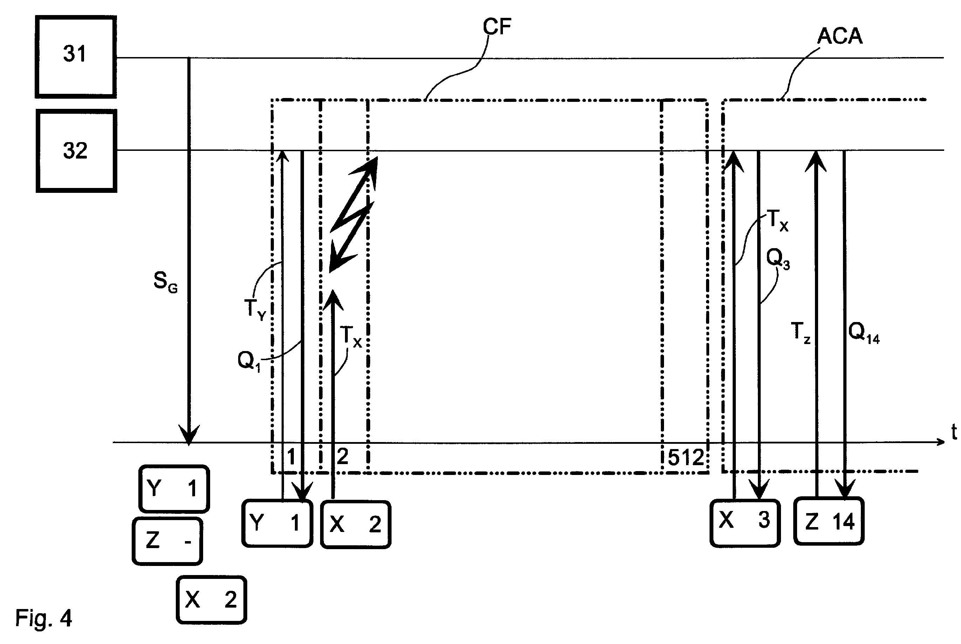

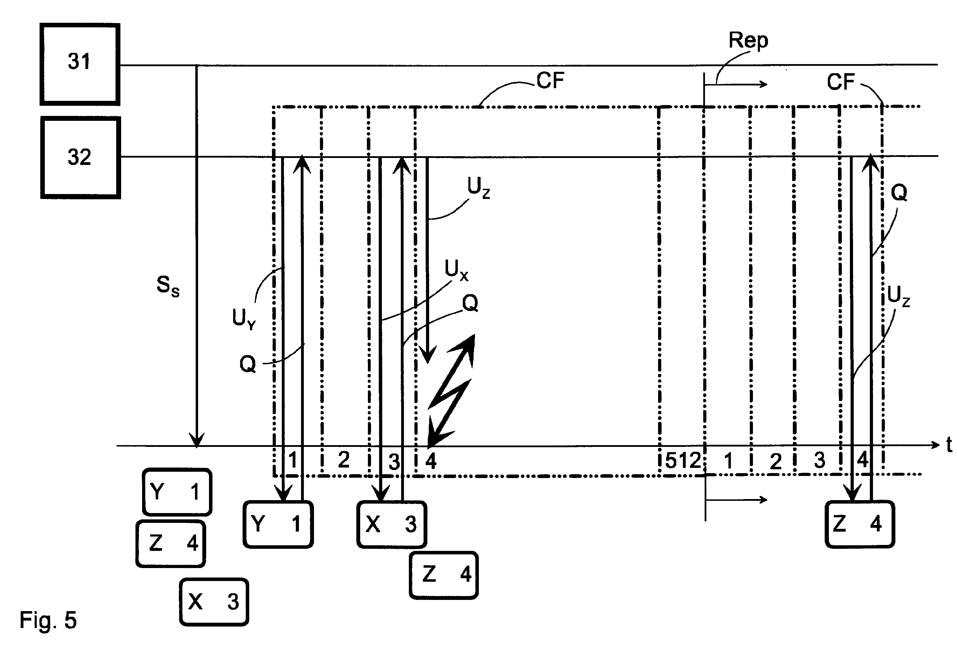

Der in den Fig. 3a und 3b dargestellte Ablauf muss für viele Billette 10 innerhalb der zwischen zwei Haltestellen verfügbaren Zeit abgewickelt werden. Die zeitliche Abfolge der Kommunikation zeigt die Fig. 4 für den Verfahrensschritt phase1 und Fig. 5 für den Verfahrensschritt phase2.

### Detaillierte Darstellung des Verfahrensschrittes phase1

Der Fachmann ordnet dieser in Fig. 4 detailliert dargestellten Phase phase1 auch den Begriff "GET" zu: Es wird von den Billetten 10 eine Information geholt. Mit der gestrichelten Umrandung CF ist ein erstes Raster CF mit sogenannten Slotzonen dargestellt, die in der vorliegenden Ausführungsform mit 1 bis 512 nummeriert sind. Je nach Anwendung kann für die Gesamtheit von dieser 512 Slotzonen eine Zeitdauer von grössenordnungsmässig 4 bis 10 s vorgesehen werden, dem entsprechend ergeben sich für einen Slot eine Dauer von ca. 8 bis 20 ms. Es werden drei Billette betrachtet, deren Identität in der Fig. 4 mit X, Y und Z bezeichnet ist. Aus einer Vorgeschichte weisen die Billette X und Y eine Slotnummer auf, dazu wird mit Bezug auf die Fig. 4 die Notation (x, 2) und (Y, 1) verwendet. Das Billett Z ist jungfräulich; (Z, -). Der Zeitpunkt der Aussendung ist durch die allenfalls auf dem Billett 10 bereits vorhandene Slotnummer bestimmt. Gemäss der Darstellung in der Fig. 4 erfolgt dies für das Billett Y mit der Einheit T_{Y}, worauf von der zweiten Sende-/Empfangseinheit 32 dies mit einer Quittung Q₁ quittiert wird. Der Index bezieht sich dabei auf die Slotnummer und nicht etwa auf das Billett. Im Fall des Billettes X mit der Vorschichte (X, 2) wird angenommen, dass die Aussendung der Informationseinheit T_{X} aus einem Fehlerfall oder Kollisionsfall von der zweiten Sende-/Empfangseinheit 32 nicht erkannt wurde. Diese Art der Kommunikation erfolgt für alle im Tram befindlichen Billette 10, deren Anzahl in der vorliegenden Ausführungsform auf 512 beschränkt ist. Nachfolgend zum Raster CF mit den 512 Slotzonen ist ein weiteres gestrichelt dargestelltes Raster ACA vorgesehen. Innerhalb dieses Rasters ACA sind keine festen Slots vorgesehen. Mit der Uebermittlung der Informationseinheit S_{G} ist auf jedem Billett auch die Einteilung und Dauer des Rasters CF bekannt. Jene Billette, die im Raster CF keine Quittung erhalten haben, nehmen die Kommunikation im Raster ACA zu einem zufällig bestimmten Zeitpunkt auf. In der Fig. 4 ist dies für das Billett X dargestellt - dieses Billett erhielt im Raster CF mit der Slotnummer 2 keine zweite Informationseinheit Q₂ als Quittung - in der übermittelten Informationseinheit Q₃ ist für das Billett X die Slotnummer 3 enthalten, diese Slotnummer 3 ersetzt die bisherige Slotnummer 2 und wird vom Billett X zukünftig verwendet. Das Billett Z erhält aufgrund einer ebenfalls zu einem zufällig bestimmten Zeitpunkt ausgesendeten Informationseinheit T_{Z} als Quittung eine Informationseinheit Q₁₄ , die auf dem Billett Z die Zuordnung (Z, 14) ergibt. Durch diese Art Nachkollektion mit der als Quittungsmeldung ausgestalteten zweiten Information ist sichergestellt, dass bei noch nicht erfolgter oder als nicht gültig erkannter Zuordnung von Slotnummer eine zuverlässige Speicherung dadurch erreicht wird. Die Dauer des Raster ACA beträgt vorzugsweise ein Mehrfaches n der Dauer des Rasters CF. Die Zahl n ist dabei abhängig von der jeweiligen Anwendung; dabei ist möglich, für n einen dynamischen Wert vorzusehen, der ebenfalls in der ersten Informationseinheit St oder allenfalls S_{G} übertragen wird. Die Verwaltung der Slotnummern erfolgt stets auf der Seite der zweiten Sende-/Empfangseinheit 32. Es reicht jedoch aus, lediglich eine Liste der Belegung der Slotnummern zu führen, die Zuordnung Slotnummer zu Billett braucht auf der Seite der zweiten Sende-/Empfangseinheit 32 zu speichern, kann in bestimmten Anwendungsfällen vorteilhaft sein, braucht aber nicht zwingend vorgenommen zu werden. Es ist durchaus möglich, dass im Raster ACA nicht alle Billette 10 erfasst wurden. Daher ist in einer weiteren bevorzugten Ausführungsform vorgesehen, dass zwischen zwei Haltestellen der Verfahrensschritt phase1 iteriert wird. Innerhalb des Rasters CF braucht dabei keine Interaktion mehr vorgenommen zu werden, sondern in zum zweiten Mal durchlaufenden Raster ACA melden sich wiederum zu zufällig bestimmten Zeitpunkten jene Billette, die noch keine Slotnummer zugeteilt bekommen haben. Durch diese Kommunikation kann der Energieverbrauch auf den Billetten minimalisiert werden: Die Billette werden durch die erste Informationseinheit S_{G} geweckt und wissen dann entweder aufgrund der zugeteilten Slotnummer, wann eine zweite Informationseinheit auszusenden ist oder im Fehlerfall ab welchem Zeitpunkt zu zufällig bestimmten Zeitpunkten eine zweite Informationseinheit T ausgesendet werden kann. Für den Empfang einer zweiten Informationseinheit Q als Quittung auf dem betreffenden Billett dient der betreffende Slot.

Alternativ zum vorstehend für die Phase phase1 bzw. mit GET bezeichneten Verfahrensschritt können von 1 an beginnend, den Billetten 10 lückenlos fortlaufend Slotnummern zugeteilt werden, dazu wird auf der Seite der Sende-/Empfangseinheit ein Slotnummernzähler jeweils dann um den Wert 1 erhöht, wenn einem Billett mit einer Meldung Q ein Slot zugeorndet wurde. das bedeutet, das ein Billett, das sich aufgrund der Vorgeschichte mit einer relativ hohen Slotnummer gemeldet hat, mit der Meldung Q eine tiefere Slotnummer für die zukünftige Kommunikation zugeteilt erhält.

Das vorstehend erwähnte Verfahren wie auch die Alternative für die Phase phase1 bzw. den mit GET bezeichneten Verfahrensschritt ist auch anwendbar, wenn die Slotnummern zeitlich gesehen mit Dekrementen um 1 verwaltet werden, im vorliegenden Ausführungsbeispiel hätte der erste Slot die Nummer 512.

### Detaillierte Darstellung des Verfahrensschrittes phase2

Der Fachmann ordnet dieser in Fig. 5 detailliert dargestellten Phase phase2 auch den Begriff "SET" zu: Es kann auf die Billette 10 eine Information gezielt übertragen bzw. eben gesetzt werden. Mit der gestrichelten Umrandung CF ist wiederum ein Raster CF mit den vorgenannten Slotzonen dargestellt, die mit den Slotnummern 1 bis 512 versehen sind. Es werden drei Billette X, y und Z betrachtet, deren Identität und Slotzonenzuordnung mit (X, 3), ((y, 1) und (z, 4) bezeichnet sind. Von der ersten Sendeeinheit 31 wird eine erste Informationseinheit S_{S} ausgesendet. Aufgrund des oder der vorangegangenen Verfahrensschritte phase1 ist auf jedem Billett die Information enthalten, in welchem Slot - identifiziert durch die Slotnummer - eine Meldung für das betreffende Billett kommt. Mit dem Empfang der ersten Informationseinheit S_{S} werden die Billette "geweckt" und können bis zum jeweiligen billettindividuellen Slot wieder "einschlafen"; dadurch ist eine erhebliche Energieeinsparung möglich. In den betreffenden Slots erfolgt von der zweiten Sende-/Empfangseinheit 32 eine "adressierte" Uebermittlung von zweiten Informationseinheiten U, im Beispiel gemäss der Fig. 5 sind dies in der Reihenfolge der Slotzonen die Informationseinheiten U_{Y}, U_{X} und U_{Z}. Der Empfang einer Informationseinheit U wird vom betreffenden Billett mit einer zweiten Informationseinheit Q quittiert. Im Falle der Zuordnung (Z, 4) wird angenommen, dass die zweite Informationseinheit U_{Z} vom Billett Z nicht empfangen werden konnte. Dies wird auf Seite der zweiten Sende-/Empfangseinheit 32 durch das Ausbleiben einer entsprechenden zweiten Informationseinheit Q festgestellt. Für den Verfahrensschritt phase2 kann ebenfalls eine Wiederholung des Ablaufes des Rasters CF vorgesehen sein; die erste Wiederholung ist in der Fig. 5 mit Rep bezeichnet. Die Festlegung Anzahl Wiederholungen ist für die betreffende Erfassungszone 22 gültig und in der ersten Informationseinheit S_{S} ebenfalls enthalten. Gemäss der Darstellung in der Fig. 5 erfolgt im Slot mit der Slotnummer 4 eine weitere Aussendung einer zweiten Informationseinheit U_{Z} , die vom betreffenden Billett Z mit einer zweiten Informationseinheit Q quittiert wird. In den weiteren Wiederholungen des Rasters CF erfolgt eine Aussendung nur noch in jenen Slots, denen vorgängig ein Billett zugeordnet wurde und von denen aus dem Verfahrensschritt phase2 noch keine zweite Informationseinheit Q empfangen werden konnte.

Die vorstehend aufgeführten Informationseinheiten St, S_{G}, S_{S}, T und Q weisen in einer bevorzugten Ausführungsform der vorliegenden Erfindung die nachstehend mittel der Tabellen 1 und 2 erläuterte Struktur auf. Dabei sind nur die für die Ausführung der vorliegenden Erfindung notwendigen Felder aufgeführt.

**Tabelle 1**

| **Struktur der Informationseinheiten S**_{**G**} **,S**_{**S**} **, T und Q** | |
|---|---|
| **Informationsfeld** | **Bedeutung** |
| : | |
| RECEIVE-ID | Adresse des Empfängers; einschliesslich der Angabe z.B. 0xFFFFFFFFH für Broadcast |
| SENDER-ID | Adresse des Senders; symmetrische Darstellung zu RECEIVE-ID |
| CONTIN_NR | Laufnummer; Wertebereich 0 .. 0xFFH |
| LEN | Länge der Informationseinheit ab diesem Feld |
| KEY | Schlüssel; Werte: MULTI; SINGLE; QUITT; NO-ACKN; ... |
| PAYLOAD | Nutzinformation, wenn im Feld KEY ein Wert MULTI enthalten ist, ist im Feld PAYLOAD ein Subrecord enthalten, ansonsten ist die Nutzinformation direkt in diesem Feld enthalten. |

Diese Struktur mit dem Wert KEY<>MULTI ist insbesondere für die Informationseinheiten S_{G} ,S_{S} , T und Q vorgesehen. Für die Informationseinheiten T und U kann im Feld KEY der Wert MULTI vorgesehen sein, so dass im Feld PAYLOAD ein weiterer Record enthalten sein kann. Diese Struktur des Subrecords PAYLOAD ist für den vorgenannten wo im Informationsfeld vereinbarte Wert MULTI steht, in der nachfolgenden Tabelle 2 beispielhaft für zwei Subinformationseinheiten dargestellt. Anstelle des Begriffes Informationseinheit verwendet der Fachmann auch die Begriffe Record und Telegramm, je nach der jeweiligen Sichtweise, nämlich ob aus Sicht der Informatik oder aus Sicht der Datenübermittlung bzw. Telekommunikation. Demzufolge werden diese Informationseinheiten mit einer bestimmten, aber variabel ausgestalteten Struktur auch als Containertelegrammen bezeichnet. Der Inhalt des Feldes RECEIVE-ID beschreibt die Adresse des Empfängers. Hier wird angenommen, dass der Adressraum mit 4 Bytes entsprechend 2 dimensioniert ist. Dabei können bestimmte Werte in hexadezimaler Darstellung wie z.B. 0xFFFFFFF oder 0xFFFF00 für bestimmte Broadcastmeldungen vorgesehen sein. Für das Feld KEY sind in der Tabelle 1 nicht abschliessend symbolische Werte angegeben, diese können beispielsweise in einer Darstellung von einem Byte durch eine ODER-Verknüpfung kombiniert werden. Die angegebenen Werte stehen für
- MULTI:: Das Feld PAYLOAD enthält wenigstens einen Subrecord;
- SINGLE:: Das Feld PAYLOAD ist einfach;
- QUITT:: Die Informationseinheit ist eine Quittung;
- NO-ACKN:: Der Empfänger braucht den Empfang der übermittelten Informationseinheit nicht zu bestätigen (=quittieren).

Die vorstehenden aufgeführten Inhalte können teilweise auch in anderen Feldern - auch Flags genannt - enthalten sein und die Einbettung in eine Struktur gemäss der Tabelle 2 stellt lediglich ein Beispiel einer Implementierung der vorliegenden Erfindung dar.

**Tabelle 2**

| **Struktur des Records PAYLOAD** | |
|---|---|
| **Informationsfeld** | **Bedeutung** |
| SUB-LENGTH1 | |
| SUB-KEY1 | |
| SUB-PAYLOAD1 | |
| SUB-LENGTH2 | |
| SUB-KEY2 | |
| SUB-PAYLOAD2 | |

Im Feld LEN der Informationseinheit ist die Länge in Byte ab diesem Feld angegeben. Die Struktur des Records PAYLOAD hat ihrerseits Längen für die sogenannten Unterschlüssel und Unternutzinformationseinheiten, so dass sich dadurch eine zusätzliche Möglichkeit ergibt, die Plausibilität der übertragenen Informationseinheiten zu überprüfen. Zusätzlich bedeutet hier, dass in der Anwendung des erfindungsgemässen Verfahrens für die Uebertragung auf der sogenannten Sicherungsschicht die Ueberprüfung der korrekten Uebertragung geleistet wird und dass allenfalls in einer darüberliegenden Schicht noch eine Verschlüsselung vorgenommen wird, da mit den übertragen Informationen eine Verrechnung u.a. auch eine Verrechnung vorgenommen wird.

Die Struktur der vorgenannten Informationseinheit für die Quittierung insoweit identisch, als im Feld KEY die Werte SINGLE oder QUITT enthalten sind, die zusammen mit einer bestimmten Angabe im Feld LEN auch eine feste, d.h. fixe Struktur im Feld PAYLOAD hinweisen.

Die Kommunikation von einer Sende-/Empfangseinheit 32 zu den Billetten 10 muss aus empfangsbedingten Gründen iteriert werden. Um auf den Billetten 10 keine unnötigen Bearbeitungsschritte des Prozessormoduls 16 ausführen zu müssen, ist in einem Feld CONT_NR eine fortlaufende Nummer enthalten, die jedesmal dann um einen Schritt verändert wird, wenn eine neue Information, z.B. ein neuer Strecken- oder Tarifabschnitt zu übermitteln ist.

Die vorstehend beschriebene Technik der Schachtelung von Records wird mit dem Begriff Containertelegramme bezeichnet. Die verschieden Subrecords sind insbesondere dann vorteilhaft, wenn mit einer ausgesandten Informationseinheit lediglich eine bestimmte Information, wie z.B. die nächste Haltestelle oder die mutmassliche Ankunftszeit am Zielort übermittelt werden soll. In einer solchen Anwendung ist im Feld RECEIVE-ID eine sogenannte Broadcastadresse eingetragen und im Feld KEY ist der Hinweis, dass die empfangene Meldung vom Billett nicht zu quittieren ist, beispielsweise mit "NO-ACKN". Je nach Anwendung können auch verschiedene Arten von Broadcasts vorgesehen werden, in dem bestimmte Ausschnitte aus dem Adressraum, z.B. die Adressen 0x00000000 .. 0x0000FFFF (Angabe in hexadezimaler Schreibweise) eine feste vorgegebene Bedeutung haben. Wenn bestimmte Adressen im Feld RECEIVE_ID für Broadcasts vorgesehen sind, ist es vorteilhaft, dies identisch sowohl in der ersten Informationseinheit S_{S} wie auch in der zweiten Informationseinheit U vorzusehen. Auf den Billetten kann für diesen Fall vorgesehen werden, dass sich alle Billette in einem bestimmten Slot aktiv schalten - und anschliessend wieder in den Schlafzustand gehen -, damit das Funkmedium möglichst wenig belegt wird. Die Iteration des Rasters CF in der Phase phase2 braucht vor allem dann vorgenommen zu werden, wenn bestimmte Informationen gezielt auf die in der Erfassungszone 22 befindlichen Billette geschrieben werden sollen. Es ist deshalb erwünscht, das Funkmedium möglichst wenig zu belegen, weil für den Fall eines Trams oder von Autobussen im Bereich von grossen Haltestellen notwendigerweise eine Ueberlappung der verschiedenen Erfassungszonen auftritt und dadurch Kollisionen in der Kommunikation provoziert werden. Durch die vorgenannten Mechanismen wie z.B. Quittung aufgrund eines CRC-Checks oder die Struktur der übermittelten Informationseinheiten mit den Feldern SENDER_ID und RECEIVE_ID sind Fehlerfassungen ausgeschlossen, möglich bleibt eine temporäre Nichterfassung.

Abhängig von der Anorderungen einer konkreten Anwendung lässt sich das erfindungsgemässe dreiphasige Verfahren mit den Phasen marq, phase1 und phase2 zusammen mit der flexiblen Struktur der übermittelten ersten und/oder zweiten Informationseinheiten an weitere Anwendungen anpassen und ist deshalb überhaupt nicht auf die vorstehend beschriebene Ausführungsform beschränkt.

Mit einer Interaktion durch eine Person kann in einer weiteren Ausführungsform der vorliegenden Erfindung bewusst der Bezug einer Leistung "legalisiert" bzw. die Bezug einer Leistung erfolgt mit einem expliziten Einverständnis durch die das Billett 10 benutzende Person. Dies kann entweder mit einem Betätigungselement auf dem Billett 10 vorgenommen werden oder durch ein Gerät, das mit dem Billett 10 in galvanischen oder nur funkmässigen Kontakt ist. Für den sogenannt funkmässigen Kontakt sind die weiteren Sende-/Empfangsmodule 13 und 14 auf dem Billett 10 vorgesehen, die beispielsweise auf dem Prinzip Vincinity- oder Proximity-Card beruhen. Auf diese Weise wird sichergestellt, dass seitens des Trägers bzw. der einem solchen Billett zugeordneten Person eine Willenserklärung zum Bezug einer Leistung vorangegangen ist.

Die vorliegende Erfindung kann auch angewendet werden für die Verfolgung von Objekten, beispielsweise für das Tracing von Wertkoffern innerhalb eines Flughafengeländes. Mit sogenannten "Combi-Billetten" lässt sich die vorliegende Erfindung auch auf Parkhäuser anwenden. Mit ein und demselben elektronischen Billett 10 kann sowohl in einem öffentlichen Verkehrsverbund mit einer Erfassung auf dem Prinzip "Be-In/Be Out" ohne willentliche Einverständniserklärung wie auch für eine Erfassung auf dem Prinzip einer willentlich Einverständniserklärung eine Registrierung vorgenommen werden.

### Liste der Bezugszeichen und Abkürzungen

- 10: elektronisches Billett
- 11: Erstes Empfangsmodul
- 12: Zweites Sende-/Empfangsmodul
- 13: Drittes Sende-/Empfangsmodul
- 14: Viertes Sende-/Empfangsmodul
- 15: Antennen
- 16: Prozessormodul
- 17: Speichermodul
- 18: Energieversorgungsmodul
- 19: Batterie
- 20: Eisenbahnwagen
- 22: Erfassungszone
- 23: Passagierraum
- 24: Plattform
- 25: Wageneingang
- 26: Wagendurchgang
- 31: Erste Sendeeinheit
- 32: Zweite Empfangseinheit, zweite Sende-/ Empfangseinheit
- ACA: Antikollisionsalgorithmus (anti collision algorithm)
- CRC: Cyclic Redundancy Check
- Loc: Haltestelle
- Q: als Quittung bzw. Quittungsmeldung vorgesehene zweite Informationseinheit
- S_{G}: erste Informationseinheit, Initialisierung des Schrittes phase, 1: Get, S: Signal
- S_{S}: Erste Informationseinheit, Initialisierung des Schrittes phase2: Set: S
- St: Erste Informationseinheit, Stempelung
- T, U: Zweite Informationseinheit, abhängig von der Kommunikationsrichtung
- marq: Verfahrensschritt Stempelung, marquage
- phase, phase1, phase2: Verfahrensschritt, der mit einer ersten Informationseinheit St, S_{S} oder S_{G} initiiert wird.

## Patentansprüche

1. Verfahren zur Registrierung von Billetten (10) für die Feststellung einer zu beziehenden Leistung und/oder einer definierten Anwesenheit innerhalb einer Erfassungszone (22), wobei die Billette (10) ein Prozessormodul (16), ein Speichermodul (17) und wenigstens ein erstes Empfangsmodul (11) und ein zweites Sende-/Empfangsmodul (12) aufweisen und in der Erfassungszone (22) wenigstens eine erste Informationseinheiten (St, S_{G}, S_{S}) aussendende Sendeeinheit (31) und für eine bidirektionale Kommunikation mit den Billetten (10) mittels übermittelter zweiter Informationseinheiten (S, T, Q) eine zweite Sende-/Empfangseinheit (32) zugeordnet sind;
wobei durch die Aussendung von ersten Informationseinheiten (St, S_{G}, S_{S}) die in der Erfassungszone befindlichen Billette (10) wenigstens intermittierend aktiv geschaltet werden; **gekennzeichnet durch** die Verfahrensschritte,
marq: die erste Informationseinheit (S) enthält die Identität (SENDER-ID) der Erfassungszone (22) oder der den Erfassungszonen (22) zugeordneten Sende- und Sende/Empfangseinheiten (31, 32) und wird bei Empfang **durch** ein Billett (10) auf diesem gespeichert;
phase: mit einer weiteren von einem Billett (10) empfangenen ersten Informationseinheit (S_{G}, S_{S}) wird eine bidirektionale Kommunikation mittels zweiter Informationseinheiten (T, U; Q) dann initiiert, wenn die im Verfahrensschritt marq: und phase: übermittelte Identität (SENDER-ID) übereinstimmt, wobei in den zweiten Informationseinheiten (T, U; Q) ein Feld (KEY) vorgesehen ist, das die Struktur der zweiten Informationseinheit (T, U; Q) beschreibt.

2. Verfahren nach Anspruch 1,
dass die Frequenz der ersten Sendeeinheit (31) so gewählt ist, dass das Feld innerhalb der Erfassungszone (22) als Nahfeld ausgebildet ist.

3. Verfahren nach Anspruch 1 oder 2,
dass die Frequenz der zweiten Sende-/Empfangseinheit (32) und des zweiten Sende-/Empfangsmoduls (12) so gewählt ist, dass das elektromagnetische Feld in der Erfassungszone (22) als Fernfeld ausgebildet ist.

4. Verfahren nach einem der Ansprüche 1 bis 3,
**dadurch gekennzeichnet, dass**
der Verfahrensschritt phase: iteriert wird.

5. Verfahren nach einem der Ansprüche 1 bis 4,
**dadurch gekennzeichnet, dass**
der Verfahrensschritt phase: in die Schritte phase1: und phase2: gegliedert ist.

6. Verfahren nach einem der Ansprüche 1 bis 5,
**dadurch gekennzeichnet, dass**
der korrekte Empfang einer ausgesandten zweiten Informationseinheit (T, U) mit einer in der Gegenrichtung ausgesandten zweiten Informationseinheit (Q) als Quittungsmeldung (Q) bestätigt wird.

7. Verfahren nach Anspruch 5 oder 6,
**dadurch gekennzeichnet, dass**
im Verfahrensschritt phase1: ein erstes Raster (CF) mit einer festen Einteilung in Slots und ein zweites Raster (ACA) vorgesehen sind und dass auf jedem Billett (10) eine Zuordnung zu einem Slot mit einer Slotnummer speicherbar ist.

8. Verfahren nach Anspruch 7,
**dadurch gekennzeichnet, dass**
jene Billette (10), bei denen eine Slotnummer gespeichert ist, eine zweite Informationseinheit (T) im betreffenden Slot aussenden und die anderen Billette (10) zu einem zufällig bestimmten Zeitpunkt innerhalb des zweiten Rasters (ACA) eine zweite Informationseinheit (T) aussenden, wobei in der Quittungsmeldung (Q) eine Slotnummer enthalten ist und bei noch nicht erfolgter oder als nicht gültig erkannter Zuordnung gespeichert wird.

9. Verfahren nach Anspruch 8,
**dadurch gekennzeichnet, dass**
dass die Billette (10) während der Aussendung einer zweiten Informationseinheit (T) und eines Intervalls danach aktiv geschaltet sind.

10. Verfahren nach Anspruch 8 oder 9,
**dadurch gekennzeichnet, dass**
der Verfahrensschritt phase1: iteriert wird und dass die Dauer des zweiten Rasters ACA ein Mehrfaches der Dauer des ersten Rasters (CF) beträgt.

11. Verfahren nach einem der Ansprüche 8 bis 10;
**dadurch gekennzeichnet, dass**
der Verfahrensschritt phase2: in einem Raster (CF) mit einer festen Einteilung in Slots vorgenommen wird und nach Empfang der weiteren ersten Informationseinheit (S_{S}) jedes Billett (10) im betreffenden Slot aktiv geschaltet wird, um eine von der zweiten Sende-/Empfangseinheit (32) ausgesendete zweite Informationseinheit (U) empfangen zu können.

12. Verfahren nach Anspruch 11,
**dadurch gekennzeichnet, dass**
im Verfahrensschritt phase2: das Raster (CF) repetitiv vorgesehen ist.

13. Verfahren nach Anspruch 12,
**dadurch gekennzeichnet, dass**
im Verfahrensschritt phase2: in den dem ersten Raster (CF) folgenden Raster (CF) nur noch in jenen Slots von der zweiten Sende-/Empfangseinheit (32) zweite Informationseinheiten (U) ausgesendet werden, in denen vorgängig vom betreffenden Billett (10) keine Quittungsmeldung (Q) empfangen wurde.

14. Verfahren nach einem der Ansprüche 6 bis 13;
**dadurch gekennzeichnet, dass**
das Aussenden einer Quittungsmeldung (Q) dann erfolgt, wenn aufgrund einer Prüfung (CRC) in der Sicherungsschicht kein Fehler festgestellt wurde.

15. Verfahren nach einem der Ansprüche 1 bis 14;
**dadurch gekennzeichnet, dass**
dass in den übermittelten ersten und/oder zweiten Informationseinheiten (S, T, U; Q) in wenigstens einem Informationsfeld (KEY) eine Information enthalten ist, ob die betreffende Informationseinheit () eine variable Struktur aufweist.

16. Verfahren nach Anspruch 1 bis 15;
**dadurch gekennzeichnet, dass**
in den an die Billette (10) übermittelten ersten und/oder zweiten Informationseinheiten (S, T, U; Q) in wenigstens einem Informationsfeld (RECEIVE_ID) eine Information enthalten ist, dass sich die betreffende Informationseinheit an nur ein Billett (10) oder an eine Vielzahl von Billetten (10) gerichtet ist.

17. Verfahren nach Anspruch 1 oder 16,
**dadurch gekennzeichnet, dass**
in den an die Billette (10) übermittelten ersten und/oder zweiten Informationseinheiten (S, T, U) in wenigstens einem Informationsfeld (CONTIN-NR) eine Laufnummer enthalten ist, die dann eine Aenderung erfährt, wenn der Nutzinhalt einer vorhergehend ausgesandten Informationseinheit (S, T, U) eine Aenderung erfahren hat.
